(19) Europäisches Patentamt
European Patent Office
Office européen des brevets

(11) **EP 1 297 088 B1**

(12) **EUROPÄISCHE PATENTSCHRIFT**

(45) Veröffentlichungstag und Bekanntmachung des Hinweises auf die Patenterteilung:
**22.08.2007 Patentblatt 2007/34**

(21) Anmeldenummer: **01955290.0**

(22) Anmeldetag: **25.05.2001**

(51) Int Cl.:
**C09J 7/02** (2006.01)

(86) Internationale Anmeldenummer:
**PCT/EP2001/005986**

(87) Internationale Veröffentlichungsnummer:
**WO 2001/096489 (20.12.2001 Gazette 2001/51)**

(54) **OBERFLÄCHENSCHUTZFOLIE FÜR LACKOBERFLÄCHEN MIT EINER SELBSTKLEBEMASSE AUF POLYURETHAN-BASIS**

SURFACE PROTECTING FILM FOR PAINTED SURFACES, COMPRISING A POLYURETHANE-BASED PRESSURE-SENSITIVE COMPOSITION

FEUILLE DE PROTECTION DE SURFACE POUR SURFACES PEINTES, AU MOYEN D'UN PRODUIT AUTO-ADHESIF A BASE DE POLYURETHANNE

(84) Benannte Vertragsstaaten:
**DE ES FR GB IT**

(30) Priorität: **15.06.2000 DE 10029489**

(43) Veröffentlichungstag der Anmeldung:
**02.04.2003 Patentblatt 2003/14**

(73) Patentinhaber: **tesa AG**
**20253 Hamburg (DE)**

(72) Erfinder:
- **SCHÜMANN, Uwe**
  **25421 Pinneberg (DE)**
- **BÖHM, Nicolai**
  **20257 Hamburg (DE)**
- **WAPPLER, Ulrike**
  **20253 Hamburg (DE)**
- **SCHÜTZ, Ingolf**
  **20535 Hamburg (DE)**
- **STEINFORTH, Johannes**
  **21640 Bliedersdorf (DE)**
- **KLEMP, Jobst-Waldemar**
  **22869 Schenefeld (DE)**

- **NEUBERT, Ingo**
  **22850 Norderstedt (DE)**
- **MÜSSIG, Bernhard**
  **21218 Seevetal (DE)**

(74) Vertreter: **Stubbe, Andreas**
**tesa AG**
**Quickbornstrasse 24**
**20253 Hamburg (DE)**

(56) Entgegenhaltungen:
**EP-A- 0 826 542          EP-A- 0 905 209**
**US-A- 6 040 028**

- **PATENT ABSTRACTS OF JAPAN vol. 014, no. 043 (C-0681), 26. Januar 1990 (1990-01-26) & JP 01 275687 A (TOYODA GOSEI CO LTD), 6. November 1989 (1989-11-06)**

Bemerkungen:
Die Akte enthält technische Angaben, die nach dem Eingang der Anmeldung eingereicht wurden und die nicht in dieser Patentschrift enthalten sind.

EP 1 297 088 B1

## Beschreibung

Die Erfindung betrifft die Verwendung einer Oberflächenschutzfolie, die aufgrund ihrer großen Witterungsbeständigkeit und Haftungssicherheit für den temporären Schutz von frischen Automobillackoberflächen gegen Verschmutzungen und Beschädigungen geeignet ist.

Die Konservierung und der Schutz von Kraftfahrzeugen während des Transports vom Hersteller zum Händler werden schon seit geraumer Zeit praktiziert.

Die herkömmliche Methode der Konservierung von Automobilen ist das Auftragen von Paraffin- oder Acrylatwachsen in der Stärke von 5 bis 20 μm. Es hat sich aber gezeigt, daß insbesondere bei waagerecht liegenden Flächen der Fahrzeuge, wie Motorhaube, Dach und Kofferraumdeckel, eine derart dünne und zumeist ungleichmäßige Schicht gegen äußere Einflüsse, wie beispielsweise die ätzende Wirkung von Vogelkot, nicht genügend Schutz bietet.

Ein erheblicher Nachteil der Paraffinwachsversiegelung ist die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Eine aktuelle Entwicklung auf dem Gebiet des Automobil-Transportschutzes ist der Einsatz von Hauben, die das gesamte Fahrzeug bedecken und durch Wärmeeinwirkung paßgenau aufgeschrumpft werden. Solche Haubenlösungen sind sehr kostspielig und erfordern großen Aufwand beim Anlegen der Haube, dem Aufschrumpfen und vor allem beim Einsteigen in den maskierten Wagen. Dafür sind eigens Reißverschlußöffnungen vorgesehen, die zeitraubend geöffnet und wieder verschlossen werden müssen. Die Sicht beim Rangieren eines mit einer Haube eingedeckten Kraftfahrzeugs ist stark beeinträchtigt und es kommt durch eingeschlossenen Schmutz und durch unvermeidbares Scheuern auf dem Lack stellenweise zu Kratzern.

In den letzten Jahren werden stattdessen verstärkt temporär aufgebrachte selbstklebende Oberflächenschutzfolien angewendet. Diese sind speziell für den mechanischen und chemischen Schutz von frischen Kraftfahrzeuglacken vorgesehen und haben eine gegenüber den Wachsen deutlich verbesserte Schutzwirkung und gegenüber den Hauben den Vorteil, kostengünstiger und deutlich schneller applizierbar zu sein.

Eine wesentliche Anforderung an eine Oberflächenschutzfolie ist ihre Witterungsbeständigkeit über einen Zeitraum von mehr als einem halben Jahr. So muß eine solche Folie auch nach einem halben Jahr intensiver Sonnenlichtexposition in einem Stück abziehbar sein und darf keine Klebmasserückstände auf dem Lack hinterlassen. Sie muß zudem eine ausreichende Anfangsklebrigkeit haben, um sich in schwierigen Verklebungsgeometrien nicht vorzeitig selbsttätig abzulösen, darf gleichzeitig aber auch keine zu große Endklebkraft auf Lack aufweisen, damit die Folie ohne großen Kraftaufwand oder gar Reißen entfernbar ist.

Gemäß dem Stand der Technik werden daher als Folienmaterialien in der Regel Polyolefine oder Mischungen aus solchen, die üblicherweise mit Lichtschutzmitteln und Titandioxid abgemischt sind, verwendet.

Als Selbstklebemassen finden vielfältige Systeme Verwendung, die aber ausnahmslos mit Schwächen behaftet sind.

Selbstklebemassen auf Naturkautschukbasis haben eine relativ gute Anfangshaftung. Diese Massen sind allerdings selbst bei kurzzeitiger Einwirkung von UV-Strahlung nicht alterungsstabil. Dies führt zu starken schmierigen oder lackartig verhärteten Rückständen auf dem Lack nach praxisrelevanten Witterungsbeanspruchungen über einen Zeitraum von einigen Monaten.

In US 5,612,136 ist eine Schutzfolie mit einer Selbstklebemasse auf Acrylatbasis erwähnt. Polyacrylatmassen sind zwar sehr UV-stabil, unterwirft man aber unvernetzte Polyacrylatmassen einer Wechselklimalagerung, so zeigen sie nur teilweise eine gute Verträglichkeit mit Lackoberflächen. Verträglichkeit bedeutet, daß die Lackoberfläche nach Entfernen des Klebebandes keinerlei Deformationen aufweist.

Deformationen sind visuell erkennbare irreversible Veränderungen der Lackoberfläche, die entstehen, wenn der frische, nicht vollständig ausgehärtete Lack mit einer ungeeigneten Schutzfolie abgedeckt wird. Zwei Effekte können beobachtet werden:

- Abdrücke der Schutzfolie im Bereich der Verklebungskanten oder an faltigen Stellen
- Mattierung des Lackes auf der gesamten Verklebungsfläche durch eine rauhe Masseoberfläche.

Zudem zeigen Polyacrylatmassen ein unerwünscht starkes Aufziehverhalten. Unter dem Begriff "Aufziehen" versteht der Fachmann die Erhöhung der Verklebungsfestigkeit bei Lagerung des Klebeverbundes. Werden diese Massen chemisch oder durch Strahlen stark vernetzt, lassen sie sich zwar leichter abziehen, verursachen aber auf der anderen Seite verstärkt deutlich sichtbare, bleibende Deformationen der Lackoberfläche.

Selbstklebemassen auf Polyisobutylenbasis (Polyisobutylenhomopolymer oder Butylkautschuk) zeigen nach einer Wechselklimalagerung auf in der Automobilindustrie gebräuchlichen Lacken eine geringe Haftfestigkeit. Die Haftfestigkeit ist bei ruckartiger Beanspruchung, wie sie bei Flattern im Fahrtwind auftritt, so gering, daß die in der Praxis geforderte Verklebungsfestigkeit nicht immer ausreichend gegeben ist. Insbesondere bei Feuchteeinfluß ist die Haftfestigkeit häufig derart reduziert, daß sich die Folie während des Transports von den geschützten Fahrzeugen ablöst, so daß zum einen keine Schutzwirkung mehr besteht und zum anderen ein Sicherheitsrisiko vorliegt, wenn die Folie unkontrolliert nachfolgenden Fahrzeugen auf die Windschutzscheibe weht. Selbstklebemassen auf Polyisobutylenbasis sind darüber hinaus wenig kohäsiv und zeigen daher Masserückstände beim Abziehen der Folie, insbesondere im Kantenbereich nach UV-Alterung. Darüber hinaus weist diese Selbstklebemasse keine Verträglichkeit mit den im Automobilbau üblichen Dichtungsprofilen beziehungsweise den darin enthaltenen Weichmachern auf. Beim Abziehen der Schutzfolie von Fensterprofilen verbleiben auf dem Gummi Rückstände des Klebers. Derartige Klebeartikel sind in EP 0 519 278, JP 95-325285 und US 5,601,917 beschrieben.

Wesentlich UV-stabiler als Polyisobutylene sind Kleber aus hydrierten Styrol-Dien-Blockcopolymeren, deren Anwendung im JP 08 027 444 beschrieben ist. Ein wesentlicher Nachteil solcher Blockcopolymere ist deren thermisch reversible Vernetzung über die Styroldomänen. Zieht man eine daraus hergestellte Klebefolie im Sommer von einem in der Sonne erwärmten Fahrzeug ab, bleibt der Kleber zum großen Teil auf dem Lack haften, weil die Kohäsion der Klebemassen geringer als die Haftung auf dem Lack ist. Eine Erwärmung führt stets zum Schrumpf der Schutzfolie, der in der Wärme weiche Kleber schmiert daher an den sich zurückziehenden Kanten der Klebefolie auf das Blech ab.

Die in der DE 195 32 220 dargelegte Klebefolie mit EVAc-Kleber ist den oben beschriebenen Systemen in der Haftung deutlich überlegen. Diese Klebefolie weist aber beim Abziehen nach Gebrauch eine deutlich zu hohe Verklebungsfestigkeit auf, wodurch die Klebefolie nur mit relativ hohem Kraftaufwand abgezogen werden kann. Diese Erhöhung der Verklebungsfestigkeit bei Lagerung des Klebeverbundes wird vom Fachmann "Aufziehen" genannt. Bei hohen Temperaturen von beispielsweise 90 °C, die im Sommer auf Fahrzeugoberflächen erreicht werden, tritt dieser Effekt besonders in Erscheinung.

Die WO 96/37568 beschreibt die Verwendung von Polyhexen beziehungsweise Polyocten für einen unpolaren Haftkleber. Die in den Beispielen beschriebenen Polymere weisen zwar ein geringes Aufziehen auf, bedingt durch das niedrige Molekulargewicht derartiger handelsüblicher Polymere führen diese Polymere aber ebenfalls zu Rückständen, die man durch Zugabe anderer Polymere, dort "cold flow restricting agent" genannt, zu vermeiden versucht. Für die Praxis sind die genannten Kleber trotzdem noch zu wenig kohäsiv, was nach Bewitterung zu Rückständen führt, insbesondere wenn das Klebeband durch Wärmeeinwirkung schrumpft.

Ein ähnliches Phänomen zeigen Ethylenpropylendienmischpolymerisate (EPDM), wie sie in DE 197 42 805 genannt werden, sowie Terpolymere auf olefinischer Basis gemäß DE 197 30 193. Beide Polymerisate zeigen außerdem einen äußerst geringen Tack (Soforthaftung), was in der Praxis, insbesondere in stark gekrümmten Bereichen zu Verarbeitungsproblemen führt bzw. lange Andruckzeiten zur Folge hat.

In US 5,972,453 wird eine wiederentfernbare Klebfolie für Kraftfahrzeugscheiben beschrieben, deren polyurethanbasierter Klebstoff eine maximale Klebkraft von 0,2 N/cm erreicht. Eine derart niedrige Klebkraft ist für eine Anwendung als Transportschutzfolie für Automobillackoberflächen zu gering. Weiterhin werden keine Hinweise gegeben, ob eine solche Folie im Hinblick auf Lackdeformationen für Automobillackoberflächen geeignet ist und wie gegebenenfalls der Polyurethanklebstoff formuliert werden muß.

In der EP 0 826 542 A2 werden Klebemassen auf Polyurethanbasis beschrieben, allerdings mit sehr schwachen Klebkräften (siehe Tabelle 1 und Anspruch 1).

Die US 6,040,028 A offenbart keine Oberflächenschutzfolie mit einer Trägerschicht und einer Selbstklebeschicht auf Basis eines vernetzten Polyurethans. Bei einer Oberflächenschutzfolie ist die Klebemasse unlösbar mit dem Trägermaterial verbunden. Die US 6,040,028 A betrifft einen Kontaktklebstoff, der einen Erweichungspunkt hat (Spalte 1, Zeile 50 sowie sämtliche Beispiele) und demzufolge nicht oder nur extrem schwach vernetzt ist.

Aufgabe der Erfindung ist es, eine Oberflächenschutzfolie insbesondere für frische Automobillacke, zur Verfügung zu stellen, die die geschilderten Nachteile des Standes der Technik nicht oder nicht in dem Maße zeigt. Insbesondere soll die Oberflächenschutzfolie neben einer für den Fahrzeugtransport angemessenen Initialklebkraft über eine ausgewogene Endklebkraft, die ein leichtes Abziehen der Folie nach Gebrauch ermöglicht, und eine außerordentlich gute Witterungsbeständigkeit, Rückstandsfreiheit beim Entfernen sowie eine gute Lackverträglichkeit verfügen. Lackverträglichkeit heißt, daß keine Lackdeformationen durch den Gebrauch der Folie entstehen dürfen.

Gelöst wird diese Aufgabe durch die Verwendung einer Oberflächenschutzfolie, wie sie im Hauptanspruch niedergelegt ist. Gegenstand der Unteransprüche sind dabei vorteilhafte Weiterbildungen der Oberflächenschutzfolie.

Demgemäß betrifft die Erfindung die Verwendung einer selbstklebenden Oberflächenschutzfolie zum Schutz von empfindlichen Lack- oder Metalloberflächen und auf frisch lackierten Oberflächen von Automobilen oder Automobilteilen als Montage- oder Transportschutz aus einer Trägerschicht und einer Selbstklebeschicht auf Basis eines vernetzten Polyurethans, wobei der Verlustwinkel tan δ des Polyurethans bei Raumtemperatur im Frequenzintervall von $10^{-1}$ bis $10^2$ rad/sec ansteigt oder auf gleichem Niveau bleibt.

Als Trägerschicht des Klebers dient gemäß einer bevorzugten Ausführungsform der Erfindung eine thermoplastische Polyolefinfolie, welche mindestens ein Polyolefin aus der Gruppe der Polyethylene (zum Beispiel HDPE, LDPE, MDPE, LLDPE, VLLDPE, Copolymere des Ethylens mit polaren Comonomeren) und der Gruppe der Polypropylene (zum Beispiel Polypropylen-Homopolymere, Polypropylen-Random-Copolymere oder Polypropylen-Block-Copolymere) enthalten sollte. Bevorzugt werden Mischungen verschiedener geeigneter Polyolefine verwendet, um die mechanischen und thermischen Eigenschaften sowie Glanz, Extrusionsverhalten, Verankerung des Klebers, usw. optimal einstellen zu können.

Für die Trägerfolien ist eine Dicke von 20 bis 80 $\mu$m bevorzugt. Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- als auch in Querrichtung nicht überschreiten (Zugversuch nach DIN 53455-7-5). Aus diesem Grunde ist es vorteilhaft, wenn die Trägerfolien unverstreckt sind. Durch Recken steigt die Kraft bei 10 % Dehnung so stark an, daß die Anschmiegsamkeit nicht mehr gegeben ist.

Um der Trägerfolie die geforderte Witterungs- und Lichtstabilität zu geben, ist der Zusatz von Licht- und UV-Schutzmitteln gemäß einer weiteren hervorragenden Ausgestaltung der Erfindung anzuraten. Ihre Funktion besteht vorrangig in der Vermeidung der Versprödung oder Vergilbung der Trägerfolie.

Die Menge des Lichtschutzmittels und/oder UV-Schutzmittels sollte mindestens 0,15 Gew.-%, vorzugsweise mindestens 0,30 Gew.-% bezogen auf die Trägerfolie betragen.

Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 beschrieben. Insbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind für die erfindungsgemäße Schutzfolie geeignet.

Eine Verwendung von Antioxidantien für die Folie (zum Beispiel sterisch gehinderte Phenole (Irganox 1010) oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 aufgeführt.

Eine zusätzliche Verbesserung der Lichtstabilität der Trägerfolie ist auch durch Zusatz von Titandioxid möglich. Vorteilhaft bezüglich der mechanischen Eigenschaften und der Homogenität des Weißgrades sind 5 bis 15 Gew.-% Titandioxidzusatz.

Vorzugsweise liegt die UV-Durchlässigkeit der Schutzfolie im Bereich von 290 bis 360 nm durch das Zusammenwirken von Lichtschutzmitteln und Pigmenten unter 1 %, vorzugsweise unter 0,1 %.

Die Eigenschaften der Klebemasse lassen sich mit Hilfe einer rheologischen Oszillationsmessung gut quantifizieren. Hierbei wird die Klebemasseprobe, die sich zwischen zwei planparallelen Platten befindet, mit einer Kreisfrequenz $\omega$ sinusförmig deformiert. Wenn im Bereich kleiner Deformationen, d.h. linearer Viskoelastizität, gemessen wird, ist dieser Meßmodus quasi wegfrei und ermöglicht die Untersuchung von scherempfindlichen Stoffen, viskoelastischen Flüssigkeiten oder Festkörpern ohne irreversible Änderung der Struktur durch die Messung. Die Probe vermittelt die erregende Schwingung unter Verschiebung der Phase $\delta$ und mit verminderter Amplitude auf den Kraftaufnehmer. Man erhält ein komplexes Schubmodul G*, dessen Realteil den elastischen Anteil (Speichermodul G') und dessen Imaginärteil den viskosen Anteil (Verlustmodul G") reflektiert. Der Quotient aus diesen beiden Größen ist tan $\delta$.

$$\tan \delta = G''/G'$$

Variiert man die erregende Frequenz (Frequenzsweep), erhält man tan $\delta$ als Funktion der Frequenz. Bei kleiner Kreisfrequenz kann die Deformationsenergie im Falle viskoelastischer Flüssigkeiten durch Abgleiten der Polymerketten noch überwiegend dissipiert werden. Zu höheren Kreisfrequenzen hin ist das immer weniger möglich, da das Abgleitbestreben der Ketten der schnellen äußeren Bewegung nicht mehr nachkommt. Die eingebrachte Energie wird stattdessen zunehmend gespeichert. Bei einem viskoelastischen Festkörper verhindern die permanenten Netzpunkte jede Dissipationsmöglichkeit über den gesamten Frequenzbereich.

Entsprechend weist tan $\delta$ einen unterschiedlichen charakteristischen Verlauf: tan $\delta$ sinkt bei viskoelastischen Flüssigkeiten und steigt bei viskoelastischen Festkörpern. Im Grenzbereich ist tan $\delta$ annähernd konstant. Diese beiden Eckpunkte rheologischer Eigenschaften sind durch die Vernetzungsdichte bestimmt. Netzpunkte können durch energetische Wechselwirkungen oder Verhakungen der Polymerketten (physikalische Vernetzung) oder durch kovalente chemische Bindungen (chemische Vernetzung) entstehen.

Der Haftklebstoff der erfindungsgemäßen Schutzfolie ist eine vernetzte Polyurethanschicht. Eine Vernetzung der Polyurethanschicht im Sinne dieser Erfindung liegt dann vor, wenn die Netzpunktdichte des Haftklebstoffs so groß ist, daß sich eine komplette Raumnetzstruktur ausbildet, die die Eigenschaften eines viskoelastischen Festkörpers hat. Die Netzpunkte können dabei chemischer oder physikalischer Natur sein. Die rheologischen Eigenschaften eines solchen Stoffes sind dadurch gekennzeichnet , daß im Frequenzbereich zwischen $10^{-1}$ und $10^2$ rad/sec bei Raumtemperatur der Verlustwinkel tan $\delta$ ansteigt oder auf gleichem Niveau bleibt. Ist die Netzpunktdichte, bedingt durch die Wahl der

Polyol- und Isocyanatkomponenten und durch deren Gewichtsverhältnisse zueinander, zu gering, nimmt der Stoff die Eigenschaften einer viskoelastischen Flüssigkeit an und ist für diesen Anwendungsfall nicht erfindungsgemäß, da er dann mangels Scherfestigkeit, insbesondere bei erhöhten Temperaturen zum Abschmieren und damit verbundenen Masserückständen neigt. Eine solche Stoffcharakteristik äußert sich rheologisch durch einen abfallenden Verlauf des Verlustwinkels tan δ im Frequenzbereich zwischen $10^{-1}$ und $10^2$ rad/sec bei Raumtemperatur.

In einer bevorzugten Ausführungsform werden zur Herstellung der Polyurethanschicht aliphatische Isocyanate eingesetzt. In Frage kommen zum Beispiel Isophorondiisocyanat, Hexamethylendiisocyanat, Dicyclohexylmethan-4,4'-diisocyanat, Gemische der genannten Isocyanate oder chemisch daraus abgeleitete Isocyanate, zum Beispiel dimerisierte, trimerisierte oder polymerisierte Typen, die beispielsweise Harnstoff-, Uretdion- oder Isocyanuratgruppen enthalten. Es können aber auch aromatische Isocyanate, wie zum Beispiel Toluylendiisocyanat oder Diphenylmethan-4,4'-diisocyanat, eingesetzt werden oder Isocyanate, die aromatische Gruppen enthalten, in denen die Isocyanatgruppen selbst aber aliphatisch gebunden sind, zum Beispiel m-Tetramethylxylen-diisocyanat. Weiterhin können als Isocyanat-Komponente auch Prepolymere eingesetzt werden, also im Vorwege in einem NCO/OH-Verhältnis größer eins hergestellte Umsetzungsprodukte aus Isocyanat und Polyol.

In einer weiteren bevorzugten Ausführungsform werden als Polyol-Komponente Polypropylenglykole, Polyethylenglykole, hydrierte hydroxyl-funktionalisierte Polyisoprene, hydroxyl-funktionalisierte Polyisobutylene oder hydroxyl-funktionalisierte Polyolefine eingesetzt. In Frage kommen auch hydroxyl-funktionalisierte Polybutadiene sowie andere, hydrierte und nicht hydrierte hydroxyl-funktionalisierte Kohlenwasserstoffe. Polytetramethylenglykolether (Polytetrahydrofurane) sind ebenfalls geeignet. In Frage kommen weiterhin Polyester-Polyole sowie Gemische der genannten Polyol-Komponenten. Als Polyol-Komponente können ebenfalls Umsetzungsprodukte aus Isocyanat und Polyol eingesetzt werden, die im Vorwege in einem NCO/OH-Verhältnis kleiner 1 hergestellt wurden. Bekannte Kettenverlängerer, kurzkettige Vernetzer oder Abbrecher können ebenfalls zur Bildung der Polyurethanschicht mitverwendet werden. Um eine geeignete Streichviskosität zu erzielen, können die Polyurethankomponenten auch mit Lösungsmitteln verdünnt werden.

Neben den aufgezählten Isocyanat-Komponenten und den damit reagierenden Polyol-Komponenten können auch andere Edukte zur Bildung des Polyurethans verwendet werden, ohne den Erfindungsgedanken zu verlassen.

Um die Reaktion zwischen der Isocyanat-Komponente und der mit dem Isocyanat reagierenden Komponente zu beschleunigen, können alle dem Fachmann bekannten Katalysatoren, wie zum Beispiel tertiäre Amine oder zinnorganische Verbindungen eingesetzt werden.

Polyurethane wie oben beschrieben sind in der Herstellung Stand der Technik und beispielsweise in "Ullmann's Encyclopedia of Industrial Chemistry, Vol. A21: Polyurethanes" beschrieben.

In einer möglichen Ausführungsform enthält die Polyurethanschicht weitere Rezeptierungsbestandteile, wie zum Beispiel Füllstoffe, Pigmente, rheologische Additive, Additive zur Verbesserung der Haftung, Weichmacher, Harze (Klebrigmacher), Elastomere, Alterungsschutzmittel (Antioxidantien), Lichtschutzmittel, UV-Absorber sowie sonstige Hilfs- und Zusatzstoffe, wie beispielsweise Trockenmittel (zum Beispiel Molekularsieb-Zeolithe, Calciumoxid), Fließ- und Verlaufmittel, Benetzer (Tenside) oder Katalysatoren.

Als Füllstoffe können alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können eingesetzt werden.

Die eingesetzten Pigmente können organischer oder anorganischer Natur sein. Beispiele sind alle Arten organischer oder anorganischer Farbpigmente, insbesondere Weißpigmente wie etwa Titandioxid zur Verbesserung der Licht- und UV-Stabilität, sowie Metallpigmente.

Beispiele für rheologische Additive sind pyrogene Kieselsäuren, Schichtsilikate (Bentonite), hochmolekulare Polyamidpulver oder Rhizinusölderivat-Pulver.

Additive zur Verbesserung der Haftung können zum Beispiel Stoffe aus den Gruppen der Polyamide, Epoxide oder Silane sein.

Beispiele für Weichmacher sind Phthalsäureester, Trimellitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane. Besonders geeignet sind alterungsstabile Weichmacher ohne olefinische Doppelbindung.

Geeignete Harze (Klebrigmacher) sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5, C-9, $(C-5)_2$-Harze), gemischte C-5 / C-9-Harze, hydrierte und teilhydrierte Derivate der genannten Typen, Harze aus Styrol oder α-Methylstyrol sowie Terpen-Phenolharze und weitere wie aufgeführt in Ullmanns Enzyklopädie der technischen Chemie, Band 12, S. 525 - 555 (4. Aufl.), Weinheim.

Geeignete Elastomere sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Geeignete UV-Absorber, Lichtschutz- und Alterungsschutzmittel für die Klebemassen sind die selben, die weiter oben für die Stabilisierung der Folie aufgeführt sind, sowie sekundäre aromatische Amine und Derivate des Benzophenons.

Die Rezeptierung der Polyurethane mit weiteren Bestandteilen, wie zum Beispiel Füllstoffen und Weichmachern, ist ebenfalls Stand der Technik und wird besonders bei der Herstellung von Dichtmassen angewendet (vgl. "Ullmann's Encyclopedia of Industrial Chemistry, Vol. A 23: Sealing Materials").

In einer weiteren bevorzugten Ausführungsform wird zur Bildung des Polyurethans ein NCO/OH-Verhältnis von 0,6 bis 1,2 eingestellt.

Die thermoplastische Polyolefinfolie wird in einer bevorzugten Ausführungsform nach dem im folgenden beschriebenen Verfahren mit dem Polyurethan beschichtet:

Es werden in einem Behälter A im wesentlichen die Polyol- und in einem Behälter B im wesentlichen die Isocyanat-Komponente vorgelegt, wobei gegebenenfalls die weiteren Rezeptierungsbestandteile diesen Komponenten bereits zuvor in einem üblichen Mischverfahren zugemischt wurden.

In einem Mischer einer Zwei-Komponenten-Misch- und Dosieranlage werden die Polyol- und die Isocyanat-Komponente gemischt.

Die somit gemischte Polyurethanmasse wird auf die Polyolefinfolie aufgebracht, die sich bevorzugt mit konstanter Geschwindigkeit bewegt. Die mit der Polyurethanmasse beschichtete Polyolefinfolie wird durch einen Wärmekanal geführt, in dem die Polyurethanmasse aushärtet. Das Auftragsgewicht der Polyurethanmasse ist beliebig wählbar, vorzugsweise werden Auftragsgewichte zwischen 1 und 100 $g/m^2$, besonders bevorzugt zwischen 5 und 30 $g/m^2$ eingestellt.

Die beschichtete Polyolefinfolie wird abschließend in einer Wickelstation aufgewickelt.

Das beschriebene Verfahren ermöglicht es, lösemittelfrei zu arbeiten und vernetzte Polyurethan-Haftklebemassen in-situ herzustellen.

Um die Verankerung der Polyurethanmasse auf der Polyolefinfolie zu verbessern, können alle bekannten Methoden der Oberflächenvorbehandlung, wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus auf die Polyolefinfolie aufgetragen werden kann als auch im Extrusions- oder Coextrusionsverfahren.

Um die Abrolleigenschaften der gewickelten Rolle zu verbessern, kann die Rückseite der Polyolefinfolie mit einem Trennlack (Releaselack) vorbeschichtet werden oder aber eine trennende co- oder aufextrudierte Rückseitenbeschichtung tragen.

Eine Schutzfolie gemäß obiger Beschreibung, im wesentlichen bestehend aus einer polyolefinischen Trägerschicht und einer Selbstklebeschicht auf Basis eines vernetzten Polyurethans, zeigt aufgrund der vernetzten Polyurethan-Selbstklebeschicht hervorragende Produkteigenschaften, die auch für den Fachmann derartig nicht vorherzusehen waren.

Die vernetzten, durch den tan δ -Verlauf charakterisierten PU-Selbstklebemassen weisen auf der einen Seite eine gute Haftfestigkeit auf verschiedenen in der Automobilindustrie gebräuchlichen Lacken, auch unter Feuchte- oder Feuchtklimaeinfluß, auf, so daß sich die Schutzfolie auch unter Windeinwirkung oder unter Spannung durch Verklebung auf gewölbten Flächen nicht vom Fahrzeug ablöst. Darüber hinaus zeigt die Selbstklebemasse eine hinreichende Verklebungsfestigkeit innerhalb der ersten Minuten nach Applikation, so daß die Schutzfolie bereits nach einer halben Stunde zum Beispiel einer starken Fahrtwindbelastung (bis zu 160 km/h) ausgesetzt werden kann, andererseits nach längerem Gebrauch ohne hohen Kraftaufwandentfembar ist. Weiterhin weist die erfindungsgemäße Schutzfolie auch ohne Auftragen einer Releaseschicht trotz stark haftenden Klebers eine für den Anwender hinreichend geringe Abrollkraft auf.

Die Klebkraft der erfindungsgemäßen Schutzfolie auf 2 K-PU-Lacken liegt in der Regel frisch über 0,2 und nach Wechselklimalagerung unter 5 N/cm (analog Methode AFERA 4001). Auch die Bestrahlung der Schutzfolie mit UV-Licht, beispielsweise Xenotest 150 nach DIN 53387 1-A-X über 800 Stunden, führt zu keinen Mängeln in den Eigenschaften der Schutzfolie: es treten keine Versprödung der Folie und keine Masserückstände beim Abziehen auf.

Die erfindungsgemäße Schutzfolie ist somit zum Montage- oder Transportschutz des frischen Abschlußlacks von Automobilen oder als Verarbeitungs- und Transportschutz von frisch lackierten Stahlblechen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht seinen Endzustand erreicht hat. Die Verträglichkeit der Schutzfolie mit dem Lack, d.h. das Lackdeformationsverhalten, ist ausgezeichnet, was besonders überraschend ist, da diese Forderung bislang eher von unvernetzten Haftklebemassen erfüllt wurde. Weiterhin zeichnet sich die erfindungsgemäße Schutzfolie dadurch aus, daß sie bei Automobilen in großer Breite über Motorhaube, Dach und Kofferraum applizierbar ist und sich aufgrund ihrer Verformbarkeit planen und sogar leicht gewölbten geformten Flächen sehr gut anpaßt. Damit ist der Schutz der am stärksten durch Verschmutzung und mechanische Beschädigung gefährdeten horizontalen Flächen möglich. Aber auch schmale Bereiche wie zum Beispiel der Türschweller unter den Fenstern oder Stoßfänger können leicht abgedeckt werden. Der Schutz der vertikalen Flächen am Fahrzeug bietet sich besonders während der Montage derselben an.

Die Schutzfolie ist beständig gegen Sonnenlicht, Feuchtigkeit, Hitze und Kälte, wobei die Witterungsstabilität von wenigstens einem halben Jahr gegeben ist. Insbesondere der Zusatz von Pigmenten wie Titandioxid sowie von Lichtschutzstabilisatoren führt zu einer Verbesserung der UV-Beständigkeit der Schutzfolie. Auch höchste Sonneneinstrahlungsquoten, wie sie beispielsweise in Florida auftreten, führen nicht zu einem Versagen oder Ablösen der Schutzfolie. Die extrem geringe UV-Durchlässigkeit der Schutzfolie vermeidet die Zersetzung des Klebers durch Sonneneinwirkung.

Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen. Nach Gebrauch ist die Schutzfolie trotz der geforderten guten Haftfestigkeit rückstandsfrei und ohne Reißen der Trägerfolie abziehbar. Die stoffliche oder energetische Verwertung der Schutzfolie ist möglich, insbesondere weil selbige halogenfrei ist.

Im folgenden soll die Erfindung anhand von Beispielen erläutert werden, ohne diese damit allerdings einschränken zu wollen.

## Beispiele

Die Beschichtungen erfolgten in den Beispielen auf einer Laborbeschichtungsanlage der Firma Pagendarm. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine Zweikomponenten-Misch- und Dosieranlage der Firma Spritztechnik-EMC verwendet. Das Mischsystem war dynamisch. Der Mischkopf war für zwei flüssige Komponenten konzipiert. Der Mischrotor hatte eine variable Drehzahl bis max. ca. 5000 U/min. Bei den Dosierpumpen dieser Anlage handelte es sich um Zahnradpumpen mit einer Förderleistung von max. ca. 2 l/min.

Die A-Komponenten wurden in einem evakuierbaren Mischkessel der Firma Molteni gefertigt.

## Beispiel 1

Eine 50 $\mu$m dicke Polyolefinfolie, bestehend aus 60 Gew.-Teilen PP-Homopolymer, 30 Gew.-Teilen LLDPE, 10 Gew.-Teilen Titandioxid und 0,3 Gew.-Teilen eines HALS-Stabilisators (Tinuvin 770) wurde durch Flachfolienextrusion in 1450 mm Breite gefertigt und anschließend für die Polyurethanbeschichtung auf 50 cm Breite geschnitten.

Die Folie wies folgende physikalischen Eigenschaften auf:

| Dicke der Folie | 50 $\mu$m | DIN 53370 |
|---|---|---|
| Foliengewicht | 48 g/m$^2$ | DIN 53365 |
| Zugfestigkeit längs | 30 N/mm$^2$ | DIN 53455-7-5 |
| Kraft bei 10 % Dehnung längs | 19 N/15mm | DIN 53455-7-5 |
| Zugfestigkeit quer | 20 N/mm$^2$ | DIN 53455-7-5 |
| Dehnung längs | 450 % | DIN 53455-7-5 |
| Dehnung quer | 450 % | DIN 53455-7-5 |
| Schlagzugzähigkeit längs | 3000 mJ/mm$^2$ | DIN 53448 |
| Schlagzugzähigkeit quer | 200 mJ/mm$^2$ | DIN 53448 |

Die Folie wurde Corona-vorbehandelt und im sofortigen Anschluß mit einer entgasten, zweikomponentigen, lösemittelfreien Polyurethan-Haftklebemasse ' mit einer Auftragsstärke von 15 $\mu$m an einem Streichrakel beschichtet. Die Beschichtungsgeschwindigkeit betrug 20 m/min. Die Aushärtung erfolgte bei einer Kanaltemperatur von 80 °C. Die erhaltene Schutzfolie wurde am Rand besäumt und zu 200 m langen und 50 cm breiten Rollen gewickelt.

Die Polyurethan-Haftklebemasse setzte sich wie folgt zusammen:

| | Rohstoff | Gewichtsanteil [Gew.-%] |
|---|---|---|
| A-Komponente | Arcol 1030 ® | 2,0 |
| | Arcol 1074 ® | 89,5 |
| | Dibutylzinndilaurat | 0,3 |
| | Tinuvin 400 ® | 0,3 |
| | Tinuvin 292 ® | 0,2 |
| | Aerosil R202 ® | 1,0 |
| B-Komponente | Vestanat IPDI ® | 6,7 |

Der Verlustwinkel tan δ der Haftklebeschicht hatte bei Raumtemperatur bei einer Meßfrequenz von $10^{-1}$ rad/s einen Wert von 0,02 und stieg bis auf 0,14 bei einer Meßfrequenz von $10^2$ rad/s.

Die so hergestellte Selbstklebefolie ließ sich leicht und faltenfrei abwickeln und beim Gebrauch zum Schutz von Automobilen einwandfrei applizieren. Wegen des guten Tacks und leichter Korrigierbarkeit konnten die Verklebungsprozesse beschleunigt werden. Nach Gebrauch konnte die Selbstklebefolie bis zu einem halben Jahr Verklebungsdauer unter Außenbewitterung ohne Mängel wieder abgezogen werden.

Die Schutzfolie war durch die in der folgenden Tabelle wiedergegebenen physikalischen Eigenschaften gekennzeichnet.

| | |
|---|---|
| Gesamtdicke Schutzfolie: | 65 μm |
| Klebkraft auf Stahl bei Raumtemperatur, ½ h nach dem Aufkleben bei einem Abzugswinkel von 180° und einer Abzugsgeschwindigkeit von 300 mm/min | 0,3 N/cm |
| Klebkraft auf 2K-PU-Lack bei Raumtemperatur, ½ h nach dem Aufkleben bei einem Abzugswinkel von 180° und einer Abzugsgeschwindigkeit von 300 mm/min | 0,5 N/cm |
| Klebkraft auf 2K-PU-Lack bei Raumtemperatur, 3d nach dem Aufkleben bei einem Abzugswinkel von 180° und einer Abzugsgeschwindigkeit von 300 mm/min | 1,1 N/cm |
| Klebkraft auf 2K-PU-Lack bei Raumtemperatur, nach 3d bei 90 °C bei einem Abzugswinkel von 180° und einer Abzugsgeschwindigkeit von 300 mm/min | 1,9 N/cm |
| Klebkraft auf 2K-PU-Lack bei Raumtemperatur, nach 3d bei 90 °C bei einem Abzugswinkel von 180° und einer Abzugsgeschwindigkeit von 20 m/min | 2,3 N/cm |
| Klebkraft auf 2K-PU-Lack bei Raumtemperatur, nach 14 d Wechselklima (Zyklus 2 wie unten angegeben), einem Abzugswinkel von 180° und einer Abzugsgeschwindigkeit von 300 mm/min | 2,8 N/cm |
| Klebkraft von der Rückseite bei einem Abzugswinkel von 180° und einer Abzugsgeschwindigkeit von 300 mm/min | 0,1 N/cm |

Das Wechselklima besteht aus folgenden Zyklen:

| Zyklus 1 | | Zyklus 2 | |
|---|---|---|---|
| Dauer [h] | Temperatur [°C] | Dauer [d] | Temperatur [°C] |
| 4 | 80 | 3 | 90 |
| 4 | -30 | plus 4mal Zyklus 1 | |
| 16 | 40 bei 100% rel. Feuchte | | |

Der Zyklus 2 wird dabei insgesamt zweimal wiederholt.

Die Schutzfolie wurde auf frisch lackierten Blechen (2K-PU-Lack) verklebt und nach einer Woche abgezogen. Im Kantenbereich waren keine Lackdeformationen zu erkennen, in der Fläche war in schrägem Licht ein geringer Brillianzverlust zu beobachten. Auf Lack verklebte Muster wurden einer UV-Alterung unterzogen (800 h Xenotest 150 nach DIN 53387 1-A-X), nach dem Abziehen traten keine Klebemasserückstände auf.

**Beispiel 2**

Eine 50 μm dicke Polyolefinfolie wurde analog Beispiel 1 hergestellt, wobei die Folie aus 80 Gew.-Teilen eines PP-Randomcopolymeren mit 5,5 % Ethylen (Novolen 3300 MC, BASF), 10 Gew.-Teilen LLDPE, 7 Gew.-Teilen Titandioxid und 0,45 Gew.-Teilen eines HALS-Lichtschutzmittels (Chimassorb 944, Ciba) bestand. Die Folie wies bei 10 % Dehnung in Längsrichtung eine Kraft von 14 N/15 mm auf. Die Folie wurde Corona-vorbehandelt und im sofortigen Anschluß mit einer entgasten, zweikomponentigen, lösemittelfreien Polyurethan-Haftklebemasse mit einer Auftragsstärke von 20 μm an einem Streichrakel analog Beispiel 1 beschichtet.

Die Polyurethan-Haftklebemasse setzte sich wie folgt zusammen:

|  | Rohstoff | Gewichtsanteil [Gew.-%] |
|---|---|---|
| A-Komponente | Arcol 1030 ® | 2,6 |
|  | Arcol 1042 ® | 86,8 |
|  | Dibutylzinndilaurat | 0,4 |
|  | Tinuvin 400 ® | 0,4 |
|  | Tinuvin 292 ® | 0,2 |
|  | Aerosil R202 ® | 1,2 |
| B-Komponente | Vestanat IPDI ® | 8,4 |

Der Verlustwinkel tan δ der Haftklebeschicht hatte bei Raumtemperatur bei einer Meßfrequenz von $10^{-1}$ rad/s einen Wert von 0,01 und stieg bis auf 0,12 bei einer Meßfrequenz von $10^2$ rad/s.

Die Klebkraft auf 2K-PU-Lack betrug ½ h nach dem Aufkleben 0,3 N/cm, nach 3d/90°C bei 300 mm/min Abzugsgeschwindigkeit 1,7 N/cm, nach 3d/90°C bei 20 m/min Abzugsgeschwindigkeit 2,0 N/cm und nach 14 d Wechselklima 2,4 N/cm (alle Meßparameter analog Beispiel 1). Die Schutzfolie wurde auf frisch lackierten Blechen (2K-PU-Lack) verklebt und nach einer Woche abgezogen. Weder im Kantenbereich noch in der Fläche waren Lackdeformationen erkennbar. Auf Lack verklebte Muster wurden 800 h Xenotest 150 ausgesetzt, nach dem Abziehen traten keine Klebmasserückstände auf.

**Beispiel 3**

Eine 50 μm dicke Polyolefinfolie analoger Zusammensetzung und Fertigung wie in Beispiel 1 wurde in analoger Weise wie dort nach Corona-Vorbehandlung mit einer entgasten, zweikomponentigen, lösemittelfreien Polyurethan-Haftklebemasse in einer Auftragsstärke von 20 μm beschichtet.

Die Polyurethan-Haftklebemasse setzte sich wie folgt zusammen:

|  | Rohstoff | Gewichtsanteil [Gew.-%] |
|---|---|---|
| A-Komponente | Arcol 1030 ® | 5,5 |
|  | Arcol 1042 ® | 62,8 |
|  | Dibutylzinndilaurat | 0,4 |
|  | Tinuvin 400 ® | 0,8 |
|  | Tinuvin 292 ® | 0,4 |
|  | Palatinol N ® | 20,9 |
| B-Komponente | Vestanat IPDI ® | 9,2 |

Der Verlustwinkel tan δ der Haftklebeschicht hatte bei Raumtemperatur bei einer Meßfrequenz von $10^{-1}$ rad/s einen Wert von 0,01 und stieg bis auf 0,08 bei einer Meßfrequenz von $10^2$ rad/s.

Die Klebkraft auf 2K-PU-Lack betrug ½h nach dem Aufkleben 0,5 N/cm, nach 3d/90°C bei 300 mm/min Abzugsgeschwindigkeit 2,3 N/cm, nach 3d/90°C bei 20 m/min Abzugsgeschwindigkeit 2,9 N/cm und nach 14 d Wechselklima 4,1 N/cm (alle Meßparameter analog Beispiel 1). Die Schutzfolie wurde auf frisch lackierten Blechen (2K-PU-Lack) verklebt und nach einer Woche abgezogen. Nur im Kantenbereich waren sehr geringe Deformationen erkennbar, in der Fläche waren keine Lackdeformationen feststellbar. Auf Lack verklebte Muster wurden 800 h Xenotest 150 ausgesetzt, nach dem Abziehen traten keine Klebmasserückstände auf.

**Beispiel 4**

Eine 65 μm dicke Polyolefinfolie wurde analog Beispiel 2 hergestellt, wobei die Folie aus einer 50 μm dicken Basisschicht analoger Zusammensetzung wie in Beispiel 2 und aus einer 15 μm dicken Haftvermittlerschicht aus 20 Gew.-Teilen des PP-Randomcopolymeren und 80 Gew.-Teilen LLDPE bestand. Die Folie wies bei 10 % Dehnung in Längsrichtung eine Kraft von 18 N/15 mm auf.

Die Folie wurde wie in Beispiel 1 nach Corona-Vorbehandlung mit einer entgasten, zweikomponentigen, lösemittelfreien Polyurethan-Haftklebemasse in einer Auftragsstärke von 15 μm beschichtet.

Die Polyurethan-Haftklebemasse setzte sich wie folgt zusammen:

|  | Rohstoff | Gewichtsanteil [Gew.-%] |
|---|---|---|
| A-Komponente | Arcol 1030 ® | 5,5 |
|  | Arcol 1042 ® | 62,8 |
|  | Dibutylzinndilaurat | 0,4 |
|  | Tinuvin 400 ® | 0,8 |
|  | Tinuvin 292 ® | 0,4 |
|  | Centroplast FU 290 ® | 20,9 |
| B-Komponente | Vestanat IPDI ® | 9,2 |

Der Verlustwinkel tan δ der Haftklebeschicht hatte bei Raumtemperatur bei einer Meßfrequenz von $10^{-1}$ rad/s einen Wert von 0,06 und stieg bis auf 0,25 bei einer Meßfrequenz von $10^2$ rad/s.

Die Klebkraft auf 2K-PU-Lack betrug ½ h nach dem Aufkleben 0,8 N/cm, nach 3d/90°C bei 300 mm/min Abzugsgeschwindigkeit 2,1 N/cm, nach 3d/90°C bei 20 m/min Abzugsgeschwindigkeit 2,9 N/cm und nach 14 d Wechselklima 3,5 N/cm (alle Meßparameter analog Beispiel 1). Die Schutzfolie wurde auf frisch lackierten Blechen (2K-PU-Lack) verklebt und nach einer Woche abgezogen. Sowohl im Kantenbereich als auch in der Fläche waren sehr geringe Deformationen erkennbar. Auf Lack verklebte Muster wurden 800 h Xenotest 150 ausgesetzt, nach dem Abziehen traten keine Klebmasserückstände auf.

**Beispiel 5**

Eine 50 μm dicke Polyolefinfolie analoger Zusammensetzung und Fertigung wie in Beispiel 1 wurde in analoger Weise wie dort nach Corona-Vorbehandlung mit einer entgasten, zweikomponentigen, lösemittelfreien Polyurethan-Haftklebemasse in einer Auftragsstärke von 20 μm beschichtet.

Die Polyurethan-Haftklebemasse setzte sich wie folgt zusammen:

|  | Rohstoff | Gewichtsanteil [Gew.-%] |
|---|---|---|
| A-Komponente | Epol ® | 89,5 |
|  | Dibutylzinndilaurat | 0,1 |
|  | Tinuvin 400 ® | 1,0 |
|  | Tinuvin 292 ® | 0,5 |
| B-Komponente | Vestanat IPDI ® | 8,9 |

Der Verlustwinkel tan δ der Haftklebeschicht hatte bei Raumtemperatur bei einer Meßfrequenz von $10^{-1}$ rad/s einen Wert von 0,15 und stieg bis auf 0,22 bei einer Meßfrequenz von $10^2$ rad/s.

Die Klebkraft auf 2K-PU-Lack betrug ½ h nach dem Aufkleben 0,2 N/cm, nach 3d/90°C bei 300 mm/min Abzugsgeschwindigkeit 1,3 N/cm, nach 3d/90°C bei 20 m/min Abzugsgeschwindigkeit 2,0 N/cm und nach 14 d Wechselklima 2,1 N/cm (alle Meßparameter analog Beispiel 1). Die Schutzfolie wurde auf frisch lackierten Blechen (2K-PU-Lack) verklebt und nach einer Woche abgezogen. Weder im Kantenbereich noch in der Fläche waren Lackdeformationen erkennbar. Auf Lack verklebte Muster wurden 800 h Xenotest 150 ausgesetzt, nach dem Abziehen traten keine Klebmasserückstände auf.

**Beispiel 6**

Eine 50 μm dicke Polyolefinfolie analoger Zusammensetzung und Fertigung wie in Beispiel 1 wurde in analoger Weise wie dort nach Corona-Vorbehandlung mit einer entgasten, zweikomponentigen, lösemittelfreien Polyurethan-Haftklebemasse in einer Auftragsstärke von 20 μm beschichtet.

Die Polyurethan-Haftklebemasse setzte sich wie folgt zusammen:

|  | Rohstoff | Gewichtsanteil [Gew.-%] |
|---|---|---|
| A-Komponente | Epol® | 70,4 |
|  | Centroplast FU 290 ® | 19,8 |
|  | Dibutylzinndilaurat | 0,2 |
|  | Tinuvin 400 ® | 1,4 |
|  | Tinuvin 292 ® | 0,7 |
| B-Komponente | Vestanat IPDI ® | 7,5 |

Der Verlustwinkel tan δ der Haftklebeschicht hatte bei Raumtemperatur bei einer Meßfrequenz von $10^{-1}$ rad/s einen Wert von 0,25 und stieg bis auf 0,35 bei einer Meßfrequenz von $10^2$ rad/s.

Die Klebkraft auf 2K-PU-Lack betrug ½ h nach dem Aufkleben 1,2 N/cm, nach 3d/90°C bei 300 mm/min Abzugsgeschwindigkeit 1,8 N/cm, nach 3d/90°C bei 20 m/min Abzugsgeschwindigkeit 2,9 N/cm und nach 14 d Wechselklima 4,1 N/cm (alle Meßparameter analog Beispiel 1). Die Schutzfolie wurde auf frisch lackierten Blechen (2K-PU-Lack) verklebt und nach einer Woche abgezogen. Im Kantenbereich waren geringe, in der Fläche keine Lackdeformationen erkennbar. Auf Lack verklebte Muster wurden 800 h Xenotest 150 ausgesetzt, nach dem Abziehen traten keine Klebmasserückstände auf.

**Vergleichsbeispiele**

**Vergleichsbeispiel 1**

Eine 50 μm dicke Polyolefinfolie analoger Zusammensetzung und Fertigung wie in Beispiel 1 wurde mit einer Haftklebemasse in einer Auftragsstärke von 20 μm beschichtet.

Als Haftklebemasse wurde ein Copolymer, bestehend aus 80 Mol-% Ethylen und 20 Mol% Buten-(1), eingesetzt. Als Lösungsmittel wurde heißes Toluol verwendet. Die Klebkraft auf Lack lag bei 0.2 N/cm (frisch) bzw. 4.9 N/cm (nach Wechselklimalagerung). Die Schutzfolie riß beim Abziehen vom lackierten Blech ein, wenn man bei einer großflächigen Verklebung an einer Ecke zog. Eine Schutzfolie gemäß diesem Beispiel zeigte starke Lackdeformationen.

**Vergleichsbeispiel 2**

Wie Vergleichsbeispiel 1, das Copolymer bestand zu 90 Mol-% aus Ethylen und zu 10 Mol-% aus Buten-(1). Als Lösungsmittel war heißes Toluol erforderlich. Die Klebkraft auf lackiertem Blech und auf Stahl lag unter 0.1 N/cm.

**Vergleichsbeispiel 3**

Wie Beispiel 1, jedoch mit einem Copolymer aus 70 Mol-% Vinylacetat und 30 Mol-% Ethylen mit einer Mooney-Viskosität ML (1+4) 100 °C von 24. Die Klebkraft auf Stahl betrug 1.0 N/cm, auf Lack 0.9 N/cm (frisch) bzw. 3.6 N/cm (nach Wechselklimalagerung). Bei Verklebung auf frischem Lack waren starke Deformationen im Kantenbereich und in der Fläche zu beobachten.

**Vergleichsbeispiel 4**

Analog Beispiel 1, als Kleber wurde eine Mischung aus Polyisobutylenen eingesetzt, 25 Gew.-Teile hatten ein Molekulargewicht $M_w$ von 1.2 Millionen, 75 Gew.-Teile von 35 Tausend. Die Klebkraft auf Lack betrug 0.6 N/cm (frisch) bzw. 1.8 N/cm (nach Wechselklimalagerung). Auf Lack verklebte Muster wurden 800 h Xenotest 150 ausgesetzt, nach dem Abziehen waren geringe Klebemasserückstände in der Fläche und sehr starke im Kantenbereich zu erkennen. Bei Verklebung auf frischem Lack waren keine Deformationen des Lackes erkennbar.

**Vergleichsbeispiel 5**

Eine 50 μm dicke Polyolefinfolie analoger Zusammensetzung und Fertigung wie in Beispiel 1 wurde in analoger Weise wie dort nach Corona-Vorbehandlung mit einer entgasten, zweikomponentigen, lösemittelfreien Polyurethan-Haftklebemasse in einer Auftragsstärke von 20 μm beschichtet.
Die Polyurethan-Haftklebemasse setzte sich wie folgt zusammen:

|  | Rohstoff | Gewichtsanteil [Gew.-%] |
|---|---|---|
| A-Komponente | Arcol 1074 ® | 40,6 |
|  | 2-Methyl-1,3-Propandiol | 16,3 |
|  | Dibutylzinndilaurat | 0,1 |
|  | Tinuvin 400 ® | 0,9 |
|  | Tinuvin 292 ® | 0,4 |
|  | Aerosil R202 ® | 1,7 |
| B-Komponente | Vestanat IPDI ® | 40,0 |

Der Verlustwinkel tan δ der Haftklebeschicht hatte bei Raumtemperatur bei einer Meßfrequenz von $10^{-1}$ rad/s einen Wert von 1,0 und fiel bis auf 0,45 bei einer Meßfrequenz von $10^2$ rad/s.
Die Klebkraft auf 2K-PU-Lack betrug 1/2 h nach dem Aufkleben 0,02 N/cm, nach 3d/90°C bei 300 mm/min Abzugsgeschwindigkeit 0,05 N/cm, nach 3d/90°C bei 20 m/min Abzugsgeschwindigkeit 0,09 N/cm und nach 14 d Wechselklima 1,2 N/cm (alle Meßparameter analog Beispiel 1). Die Schutzfolie wurde auf frisch lackierten Blechen (2K-PU-Lack) verklebt und nach einer Woche abgezogen. Im Kantenbereich und in der Fläche waren geringe Lackdeformationen erkennbar. Auf Lack verklebte Muster wurden 800 h Xenotest 150 ausgesetzt, nach dem Abziehen traten keine Klebmasserückstände auf.

**Patentansprüche**

1.  Verwendung einer selbstklebenden Oberflächenschutzfolie zum Schutz von empfindlichen Lack- oder Metalloberflächen und auf frisch lackierten Oberflächen von Automobilen oder Automobilteilen als Montage- oder Transportschutz mit einer Trägerschicht und einer Selbstklebeschicht auf Basis eines vernetzten Polyurethans,
    wobei der Verlustwinkel tan δ des Polyurethans bei Raumtemperatur im Frequenzintervall von $10^{-1}$ bis $10^2$ rad/sec ansteigt oder auf gleichem Niveau bleibt.

2.  Verwendung einer selbstklebenden Oberflächenschutzfolie nach Anspruch 1, **dadurch gekennzeichnet, dass** die Trägerschicht aus einer thermoplastischen Polyolefinfolie besteht, welche unverstreckt ist.

3.  Verwendung einer selbstklebenden Oberflächenschutzfolie nach den Ansprüchen 1 und 2, **dadurch gekennzeichnet, dass** die Trägerschicht mindestens ein Polyolefin aus der Gruppe der Polyethylene und/oder der Gruppe der Polypropylene enthält.

4.  Verwendung einer selbstklebenden Oberflächenschutzfolie nach mindestens einem der vorhergehendenAnsprü-

che, **dadurch gekennzeichnet, dass** die Trägerschicht mindestens ein lichtschutzmittel und/oder ein UV-Schutzmittel enthält, bevorzugt in einer Menge von mindestens 0,15 Gew.-%.

5. Verwendung einer selbstklebenden Oberflächenschutzfolie nach mindestens einem der vorhergehenden Ansprüche, **dadurch gekennzeichnet, dass** die UV-Durchlässigkeit der Oberflächenschutzfolie im Wellenlängenbereich von 290 bis 360 nm unter 1 % liegt.

6. Verwendung einer selbstklebenden oberflächenschutzfolie nach mindestens einem der vorhergehenden Ansprüche, **dadurch gekennzeichnet, dass** die Dicke der Trägerschicht zwischen 20 und 80 $\mu$m beträgt, gegebenenfalls einschließlich einer Haftvermittlerschicht, die zwischen der Trägerschicht und der Kleberschicht angeordnet ist.

7. Verwendung einer selbstklebenden Oberflächenschutzfolie nach mindestens einem der vorhergehenden Ansprüche, **dadurch gekennzeichnet, dass** zur Bildung des Polyurethans der Selbstklebemasse aliphatische Isocyanate eingesetzt werden.

8. Verwendung einer selbstklebenden Oberflächenschutzfolie nach mindestens einem der vorhergehenden Ansprüche, **dadurch gekennzeichnet, dass** zur Bildung des Polyurethans der Selbstklebemasse als Polyol-Komponente Polypropylenglykole, Polyethylenglykole, hydrierte hydroxyl-funktionalisierte Polyisoprene, hydroxyl-funktionalisierte Polyisobutylene oder hydroxyl-funktionalisierte Polyolefine eingesetzt werden.

9. Verwendung einer selbstklebenden Oberflächenschutzfolie nach mindestens einem der vorhergehenden Ansprüche, **dadurch gekennzeichnet, dass** der Selbstklebemasse Füllstoffe, Pigmente, rheologische Additive, Additive zur Verbesserung der Haftung, Weichmacher, Harze (Klebrigmacher), Elastomere, Alterungsschutzmittel (Antioxidantien), Lichtschutzmittel, UV-Absorber sowie sonstige Hilfs- und Zusatzstoffe zugesetzt sind.

## Claims

1. Use of a self-adhesive surface protective film for protecting sensitive surfaces of paint or metal and on freshly painted surfaces of automobiles or automobile parts as assembly protection or transit protection, having a backing layer and a self-adhesive layer based on a crosslinked polyurethane, the loss angle tan $\delta$ of the polyurethane at room temperature rising in the frequency interval from $10^{-1}$ to $10^2$ rad/sec or remaining at the same level.

2. Use of a self-adhesive surface protective film according to Claim 1, **characterized in that** the backing layer comprises a thermoplastic polyolefin sheet which is unoriented.

3. Use of a self-adhesive surface protective film according to Claims 1 and 2, **characterized in that** the backing layer comprises at least one polyolefin from the group of the polyethylenes and/or the group of the polypropylenes.

4. Use of a self-adhesive surface protective film according to at least one of the preceding claims, **characterized in that** the backing layer comprises at least one light stabilizer and/or one UV stabilizer, preferably in an amount of at least 0.15% by weight.

5. Use of a self-adhesive surface protective film according to at least one of the preceding claims, **characterized in that** the UV permeability of the surface protective film in the wavelength range from 290 to 360 nm is less than 1 %.

6. Use of a self-adhesive surface protective film according to at least one of the preceding claims, **characterized in that** the thickness of the backing layer is between 20 and 80 $\mu$m, including where appropriate an adhesion promoter layer arranged between the backing layer and the adhesive layer.

7. Use of a self-adhesive surface protective film according to at least one of the preceding claims, **characterized in that** aliphatic isocyanates are used in forming the polyurethane of the self-adhesive composition.

8. Use of a self-adhesive surface protective film according to at least one of the preceding claims, **characterized in that** the polyurethane of the self-adhesive composition is formed using as polyol component polypropylene glycols, polyethylene glycols, hydrogenated hydroxyl-functionalized polyisoprenes, hydroxyl-functionalized polyisobutylenes or hydroxyl-functionalized polyolefins.

9. Use of a self-adhesive surface protective film according to at least one of the preceding claims, **characterized in that** fillers, pigments, rheological additives, additives for improving adhesion, plasticizers, resins (tackifiers), elastomers, ageing inhibitors (antioxidants), light stabilizers, UV absorbers, and other auxiliaries and additives are added to the self-adhesive composition.

## Revendications

1. Utilisation d'un film protecteur de surface, autoadhésif, pour la protection de surfaces sensibles de peintures ou métaux et sur des surfaces fraîchement peintes d'automobiles ou de parties d'automobiles en tant que protection pendant le montage ou le transport, comportant une couche de support et une couche autoadhésive à base d'un polyuréthanne réticulé, l'angle de perte tan δ du polyuréthanne à la température ambiante augmentant dans l'intervalle de fréquence de $10^{-1}$ rad/s à $10^2$ rad/s ou restant au même niveau.

2. Utilisation d'un film protecteur de surface, autoadhésif, selon la revendication 1, **caractérisé en ce que** la couche de support consiste en un film de polyoléfine thermoplastique qui est non étiré.

3. Utilisation d'un film protecteur de surface, autoadhésif, selon les revendications 1 et 2, **caractérisé en ce que** la couche de support contient au moins une polyoléfine choisie dans le groupe des polyéthylènes et/ou dans le groupe des polypropylènes.

4. Utilisation d'un film protecteur de surface, autoadhésif, selon au moins l'une des revendications précédentes, **caractérisé en ce que** la couche de support contient au moins un photoprotecteur et/ou un agent de protection contre les UV, de préférence en une quantité d'au moins 0,15 % en poids.

5. Utilisation d'un film protecteur de surface, autoadhésif, selon au moins l'une des revendications précédentes, **caractérisé en ce que** la transparence aux UV du film protecteur de surface, dans la plage de longueurs d'onde allant de 290 à 360 nm, est inférieure à 1 %.

6. Utilisation d'un film protecteur de surface, autoadhésif, selon au moins l'une des revendications précédentes, **caractérisé en ce que** l'épaisseur de la couche de support est comprise entre 20 et 80 μm, éventuellement y compris une couche de promoteur d'adhérence qui est disposée entre la couche de support et la couche d'adhésif.

7. Utilisation d'un film protecteur de surface, autoadhésif, selon au moins l'une des revendications précédentes, **caractérisé en ce que** des isocyanates aliphatiques sont utilisés pour la formation du polyuréthanne de la matière autoadhésive.

8. Utilisation d'un film protecteur de surface, autoadhésif, selon au moins l'une des revendications précédentes, **caractérisé en ce que**, pour la formation du polyuréthanne de la matière autoadhésive, on utilise en tant que composant polyol des polypropylèneglycols, des polyéthylèneglycols, des polyisoprènes à fonctionnalité hydroxy hydrogénés, des polyisobutylènes à fonctionnalité hydroxy ou des polyoléfines à fonctionnalité hydroxy.

9. Utilisation d'un film protecteur de surface, autoadhésif, selon au moins l'une des revendications précédentes, **caractérisé en ce qu'**on ajoute à la matière autoadhésive des charges, des pigments, des additifs de rhéologie, des additifs pour l'amélioration de l'adhérence, des plastifiants, des résines (agents de pégosité), des élastomères, des agents anti-vieillissement (antioxydants), des photo-protecteurs, des absorbeurs UV ainsi que d'autres adjuvants et additifs.

## EP 1 297 088 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5612136 A
- EP 0519278 A
- JP 7325285 A
- US 5601917 A
- JP 08027444 A
- DE 19532220
- WO 9637568 A
- DE 19742805
- DE 19730193
- US 5972453 A
- EP 0826542 A2
- US 6040028 A
- EP 0763584 A

**In der Beschreibung aufgeführte Nicht-Patentliteratur**

- **GAECHTER ; MÜLLER.** *Taschenbuch der Kunststoff-Additive,* 1979, vol. 23, 615-627
- *Encycl. Polym. Sci. Technol.,* vol. 14, 125-148
- Ullmann's Encyclopedia of Industrial Chemistry. *Polyurethanes,* vol. A21
- *Ullmanns Enzyklopädie der technischen Chemie,* vol. 12, 525-555

15